**Europäisches Patentamt**

**European Patent Office**

**Office européen des brevets**

(11) Veröffentlichungsnummer: **0 174 566**

**B1**

(12) **EUROPÄISCHE PATENTSCHRIFT**

(45) Veröffentlichungstag der Patentschrift:
25.11.87

(21) Anmeldenummer: 85110929.8

(22) Anmeldetag: 30.08.85

(51) Int. Cl.⁴: **C 08 J 3/02, C 08 K 3/22,**
**C 08 K 3/26, C 08 K 3/16,**
**C 08 K 3/24**

| E R R A T U M |

(SEITE, SPALTE, ZEILE)
(PAGE, COLUMN, LINE)
(PAGE, COLONNE, LIGNE)

| DIE TEXTSTELLE :<br>TEXT PUBLISHED :<br>LE PASSAGE SUIVANT : | | | LAUTET BERICHTIGT :<br>SHOULD READ :<br>DEVRAIT ETRE LU : |
|---|---|---|---|
| -methylacrylat, n-Butylacrylat<br><br>und  -methylacrylat | 2 | 30 | -methacrylat, n-Butylacrylat<br><br>und -methacrylat |
| $10^4 s_{-1}$ | 2 | 37 | $10^4 s^{-1}$ |
| Zeigt | 3 | 31 | zeigt |

| Tag der Entscheidung<br>über die Berichtigung )<br>Date of decision on ) 12.7.88<br>rectification: )..............<br>Date de décision portant )<br>sur modification: ) | Ausgabe- und Ver-<br>öffentlichungstag: )<br>Issue and publication ) 21.9.88<br>date: )..............<br>Date d'edition et de )<br>publication: ) | Patbl.Nr)<br><br>EPB no:)..88/.38.<br><br>Bull. no:) |

## Europäisches Patentamt

## European Patent Office

## Office européen des brevets

(11) Veröffentlichungsnummer: **0 174 566**
**B1**

(12) # EUROPÄISCHE PATENTSCHRIFT

(45) Veröffentlichungstag der Patentschrift:
25.11.87

(21) Anmeldenummer: 85110929.8

(22) Anmeldetag: 30.08.85

(51) Int. Cl.⁴: **C 08 J 3/02,** C 08 K 3/22,
C 08 K 3/26, C 08 K 3/16,
C 08 K 3/24

(54) **Stark dilatante Polymerdispersionen mit verminderter Temperaturabhängigkeit der kritischen Schergeschwindigkeit.**

(30) Priorität: 06.09.84 DE 3433065

(43) Veröffentlichungstag der Anmeldung:
19.03.86 Patentblatt 86/12

(45) Bekanntmachung des Hinweises auf die Patenterteilung:
25.11.87 Patentblatt 87/48

(84) Benannte Vertragsstaaten:
AT BE CH DE FR GB IT LI NL SE

(56) Entgegenhaltungen:
GB-A-800 161

(73) Patentinhaber: BASF Aktiengesellschaft, Carl-Bosch- Strasse 38, D-6700 Ludwigshafen (DE)

(72) Erfinder: Bung, Richard, Dr., Dubliner Strasse 33,
D-6700 Ludwigshafen (DE)
Erfinder: Haas, Klaus, Ungsteiner Strasse 2, D-6700
Ludwigshafen (DE)
Erfinder: Laun, Martin, Dr., Duererstrasse 22,
D-6700 Ludwigshafen (DE)
Erfinder: Schmidt, Franz, Dr., Trommstrasse 3,
D-6800 Mannheim 1 (DE)
Erfinder: Welzel, Gerhard, Dr., Gontardstrasse 6,
D-6800 Mannheim 1 (DE)

# 0 174 566

**Beschreibung**

Aus der US-A-4 371 636 ist ein Verfahren zur Herstellung von Copolymerdispersionen mit stark dilatantem Fließverhalten bekannt. Bei diesem Verfahren werden $\alpha,\beta$-monoolefinisch ungesättigte Mono- und/oder Dicarbonsäuren mit anderen monoolefinisch ungesättigten Monomeren und gegebenenfalls kleinen Mengen mehrfach olefinisch ungesättigten monomeren Verbindungen in Gegenwart üblicher Emulgier- und Dispergiermittel, Polymerisationsinitiatoren und gegebenenfalls Reglern in wäßriger Emulsion unter gleichzeitigem Agglomerieren bei nur partiellem Verschmelzen der zunächst entstandenen Polymerteilchen eines Teilchendurchmessers von 5 bis 200 nm bei einer Temperatur nahe der Glastemperatur des entstandenen Copolymerisats copolymerisiert und dann (a) soweit noch nicht gegeben, der Copolymerisatgehalt der entstandenen wäßrigen Copolymerisat-Dispersion auf 35 bis 55 Gew.% und der pH-Wert auf 3 bis 5 eingestellt oder (b) das in der entstandenen wäßrigen Copolymerisat-Dispersion enthaltene Wasser ganz oder teilweise durch ein mit Wasser mischbares und das Copolymerisat nicht lösendes oder quellendes Lösungsmittel ersetzt. Als derartige Lösungsmittel kommen z. B. Formamid, Ethylglykol, Ethylenglykol, Diethylenglykol, Triethylenglykol, Glycerin sowie Propylenglykole und gegebenenfalls auch 4- bis 6-wertige gesättigte Alkohole oder deren Gemische in Frage. Von besonderem Interesse sind Ethylenglykol, Diethylenglykol, Glycerin und Formamid.

Als $\alpha,\beta$-monoolefinisch ungesättigte Carbonsäuren enthalten derartige Copolymerisate meist Acryl- und/oder Methacrylsäure sowie ferner Maleinsäure, Itaconsäure oder Fumarsäure, d. h. monoolefinisch ungesättigte Carbonsäuren mit im allgemeinen 3 bis 5 C-Atomen, sowie gegebenenfalls Monoester derartiger Dicarbonsäuren mit meist 1 bis 4 C-Atome enthaltenden Alkanolen, z. B. Maleinsäuremonomethylester, Fumarsäuremonomethylester oder Itaconsäure-n-butylester in Mengen von vorzugsweise 1 bis 10 Gew.% einpolymerisiert. Monoolefinisch ungesättigte Monomere, die die Copolymerisate im allgemeinen als Hauptbestandteil einpolymerisiert enthalten, sind vor allem solche, die wasserunlösliche Homopolymerisate ergeben, insbesondere monoolefinisch ungesättigte Carbonsäureester mit 1 bis 14 C-Atomen, insbesondere Acryl- und Methacrylsäureester von 1 bis 10, insbesondere von 1 bis 4 C-Atome enthaltenden Alkanolen und Vinylester von meist 2 bis 12 C-Atome enthaltenden, geradkettigen oder verzweigten aliphatischen Carbonsäuren. Beispiele für derartige olefinisch ungesättigte Ester sind vor allem die Ester des Methanols, Ethanols, n-Butanols, iso-Butanols und 2-Ethylhexylalkohols der Acryl- und Methacrylsäure, vor allem Ethylacrylat und -methylacrylat, n-Butylacrylat und -methylacrylat sowie Methylmethacrylat. Geeignete Vinylester sind vor allem Vinylacetat, Vinylpropionat und ferner Vinyl-n-butyrat. Von großem Interesse als monoolefinisch ungesättigtes Monomeres ist zudem Styrol. In Anteilen von bis zu 5 Gew.%, bezogen auf die Gesamtmonomeren kommen auch Amide der ungesättigten Carbonsäuren in Frage, und in einer Menge von bis zu 25 Gew.%, bezogen auf die Gesamtmonomeren, kommt auch Acrylnitril als Comonomeres in Betracht.

Copolymer-Dispersionen dieser Art verdicken bei der Einwirkung von Scherkräften bei einer bestimmten Schergeschwindigkeit $\gamma_k$ - der kritischen Schergeschwindigkeit, die im allgemeinen im Bereich von 0,1 bis $10^4 s_{-1}$ liegt, - sprunghaft unter Zunahme der Viskosität um mindestens das 100-fache. Diese Verdickung (Dilatanzsprung) ist reversibel, d. h. beim Unterschreiten des kritischen Wertes wird die Polymer-Dispersion wieder niedrigviskos. Mit anderen Worten: stark dilatante Dispersionen zeigen in einem engen Schergeschwindigkeitsbereich einen Viskositätsanstieg entsprechend

$$\frac{d \ln \eta}{d \ln \gamma} \geqslant 10 \ .$$

wobei die Viskosität mit wachsender Schergeschwindigkeit $\gamma$ insgesamt um den Faktor $f \geqslant 100$ zunimmt. Der Schubspannungsbereich der kritischen Schergeschwindigkeiten derartiger Dispersionen liegt im allgemeinen im Bereich von $10^3$ bis $10^6$ Pa.

Bei solchen Dispersionen ist nun die Viskositätsveränderung und die jeweilige kritische Schergeschwindigkeit stark temperaturabhängig, und zwar derart, daß die kritische Schergeschwindigkeit umso höher liegt und die Viskositätsveränderung umso kleiner ist, je höher die Temperatur der Dispersion ist. Dieses Verhalten stört beim Einsatz derartiger stark dilatanter Dispersionen, z. B. für Flüssigkeitskupplungen, Stoßdämpferfüllungen oder bei ihrer Verwendung zur Herstellung von Drehzahlbegrenzern, da hierbei der sprunghafte Viskositätsanstieg der Dispersion möglichst wenig von der Temperatur abhängen soll. Die kritische Schergeschwindigkeit derartiger Dispersionen erhöht sich beim Erwärmen von z. B. 20°C auf 60°C um den Faktor 10 bis 100, was bei den genannten Einsatzgebieten gleichfalls sehr stört.

Es wurde nun gefunden, daß Dispersionen von Copolymerisaten aus 1 bis 10 Gew.% $\alpha,\beta$-monoolefinisch ungesättigten Mono- und/oder Dicarbonsäuren und 99 bis 90 Gew.% anderen olefinisch ungesättigten Monomeren mit stark dilatantem Fließverhalten, die durch Emulsionscopolymerisation hergestellt sind, eine stark verminderte Temperaturabhängigkeit ihrer kritischen Schergeschwindigkeit zeigen, wenn sie 0,1 bis 30 Gew.%, bezogen auf die Copolymerisate, an Oxiden, Hydroxiden, Carbonaten und/oder wasserlöslichen Salzen 1- oder 2-wertiger Metalle enthalten. Von besonderem Vorteil ist dabei ein Gehalt an 0,5 bis 10 Gew.%, bezogen auf die Copolymerisate, an Oxiden, Hydroxiden, Carbonaten und/oder wasserlöslichen Salzen des Magnesiums, Calciums und/oder Zinks.

Copolymer-Dispersionen mit stark dilatantem Fließverhalten können beispielsweise nach dem Verfahren der US-A-4 371 636 hergestellt werden. Die Copolymerisate enthalten vorzugsweise 2 bis 10 Gew.% der 3 bis 5 C-Atome enthaltenden $\alpha,\beta$-monoolefinisch ungesättigten Mono- und/oder Dicarbonsäuren, insbesondere

2

Acrylsäure und/oder Methacrylsäure und/oder Maleinsäure einpolymerisiert. Als monoolefinisch ungesättigte Comonomere enthalten sie vorzugsweise 0 bis 90 Gew.% (Meth)acrylester 1 bis 14 C-Atome enthaltender Alkanole, 0 bis 90 Gew.% Styrol und/oder Methylmethacrylat und 0 bis 5 Gew.% mehrfach olefinisch ungesättigte Monomere, wie besonders Butandioldiacrylat, Trimethylolpropantriacrylat oder ferner Divinylbenzol oder Butadien einpolymerisiert. Diese können ganz oder teilweise durch monoolefinisch ungesättigte Monomere mit einer zusätzlichen reaktiven Gruppe ersetzt werden, wie N-Methylolacryl- und -methacrylamid und Glycidylacrylat und -methacrylat. Die Zusammensetzung der Monomeren wird im allgemeinen so gewählt, daß die Glastemperatur der Copolymeren oberhalb 50°C - bevorzugt oberhalb 75°C - liegt. Bei der Emulsionscopolymerisation zu ihrer Herstellung arbeitet man vorzugsweise bei 60 bis 95°C und in Gegenwart von 0 bis 0,5 Gew.% anionischem Emulgator und 0 bis 1 Gew.%, bezogen auf die Menge der Monomeren, an nichtionischem Emulgator.

Vorzugsweise werden solche Dispersionen mit hoher Dilatanz verwendet, die agglomerierte Copolymerisatteilchen mit stark unebener und unregelmäßiger Oberfläche enthalten, die bei ihrer Herstellung durch Emulsionspolymerisation durch partielles Verschmelzen der primär gebildeten Copolymerisatteilchen eines Durchmessers von 50 bis 200 nm entstanden sind. Zur Herstellung der erfindungsgemäßen Gemische kann man aber auch Dispersionen mit stark dilatantem Fließverhalten einsetzen, deren Copolymere COOH-Gruppen enthalten, die aber auf andere Weise hergestellt worden sind und anders geformte Teilchen haben.

Die flüssige Phase der Copolymerisat-Dispersionen mit stark dilatantem Fließverhalten soll bei ihrem erfindungsgemäßen Einsatz im allgemeinen mindestens 10 %, vorzugsweise mindestens 30 % Wasser enthalten; ein Wassergehalt von 30 bis 70 % hat sich besonders bewährt. Zusätzlich kann die flüssige Phase der Copolymer-Dispersionen z. B. Glykole, Diglykole, Triglykole, Glycerin und/oder Formamid enthalten.

Der Gehalt der Oxide, Hydroxide, Carbonate und/oder wasserlöslichen Salze ein- oder mehrwertiger Metalle soll 0,1 bis 30, vorzugsweise 0,5 bis 10 Gew.%, bezogen auf die Menge an Copolymerisat betragen. Geeignete Metallverbindungen sind vor allem Magnesiumoxid- und -hydroxid, Calciumoxid und -hydroxid, Zinkoxid und -hydroxid, Magnesiumsulfat und -acetat, Calciumacetat, Zinkammoniumcarbonat, Zinkacetat, Calciumcarbonat, Lithiumacetat und Lithiumhydroxid, ferner Aluminiumhydroxid, Strontiumoxid und -hydroxid, Bariumoxid und -hydroxid sowie Chloride und Sulfate des Li, Na und K. Besonders bewährt haben sich Magnesiumhydroxid, Calciumhydroxid, Zinkoxid und Zinkammoniumcarbonat.

Die erfindungsgemäßen Dispersionen mit stark dilatantem Fließverhalten, die einen Gehalt an derartigen Metallverbindungen aufweisen, zeichnen sich vor allem dadurch aus, daß ihre kritische Schergeschwindigkeit im allgemeinen im Bereich von -30 bis +80°C eine stark verminderte Temperaturabhängigkeit Zeigt, und in manchen Fällen praktisch nicht mehr temperaturabhängig ist. Dies ist besonders beim Einsatz derartiger erfindungsgemäßer Copolymerisat-Dispersionen für Schwingungsdämpfer, Drehzahlbegrenzer oder hydraulische Kupplungen von Vorteil, zumal in diesen Fällen dann oberhalb der kritischen Schergeschwindigkeit die übertragbare Kraft weniger oder praktisch nicht von der Temperatur abhängt.

Es ist zwar aus einer Vielzahl von Literaturstellen bekannt, daß man wäßrigen Dispersionen von Carboxyl-Gruppen aufweisenden Copolymerisaten, die kein dilatantes Fließverhalten zeigen, Oxide, Hydroxide und/oder wasserlösliche Salze ein- und mehrwertiger Metalle der oben genannten Art schon zugesetzt hat. Diese Zusätze dienten im allgemeinen zu einer ionischen Vernetzung der Copolymerisate bei der Filmbildung und damit zu einer Erhöhung der Wasserfestigkeit der Polymerfilme oder zum Aussalzen der Polymerisate. Auch wurde z. B. Calciumcarbonat schon in großen Mengen als Füllstoff zugesetzt. Schließlich dienten Oxide mehrwertiger Metalle schon vielfach als Pigmente in Anstrich-Dispersionen. Daraus kann jedoch nicht abgeleitet werden, daß derartige Verbindungen die Temperaturabhängigkeit der kritischen Schergeschwindigkeit stark dilatanter Polymer-Dispersionen stark beeinflussen.

Die in den folgenden Beispielen angegebenen Teile und Prozente beziehen sich, wenn nicht anders angegeben, auf das Gewicht.

## I. Herstellung von dilatanten Dispersionen

Dispersion A

In einem Rührgefäß werden 240 Teile Wasser, 70 Teile Zulauf 1 und 10 Teile Zulauf 2 vorgelegt. Zulauf 1 besteht aus 400 Teilen Styrol, 60 Teilen Ethylacrylat, 15 Teilen Acrylsäure, 15 Teilen Methacrylamid, 10 Teilen Maleinsäure, 5 Teilen einer 40 %igen wäßrigen Lösung von $C_{12}$-$C_{18}$-Natrium-Paraffinsulfonat und 180 Teilen Wasser; Zulauf 2 aus 3,5 Teilen Peroxodisulfat und 80 Teilen Wasser.

Die Vorlage wird unter Rühren auf 80°C erhitzt und 20 Minuten bei dieser Temperatur gehalten. Dann wird innerhalb von 2 1/2 Stunden der Rest der Zuläufe 1 und 2 gleichmäßig zugegeben. Die Temperatur wird dabei auf etwa 85°C gehalten. Anschließend wird noch 3 Stunden nachpolymerisieren lassen und der Ansatz dann mit 500 Teilen Wasser vermischt und abgekühlt. Die erhaltene Dispersion A hat einen Polymergehalt von 32,5 %, die Teilchen haben eine rauhe Oberfläche und einen Durchmesser von etwa 600 nm.

Nach Zusatz von Formamid bzw. Glycerin und Abdampfen von überschüssigem Wasser erhält man daraus die Vergleichsdispersionen A0 und A7.

r

Dispersion B

Man arbeitet wie bei Dispersion A angegeben, setzt aber in Zulauf 1 7,5 Teile des Paraffinsulfonats und 10 Teile einer 20 %-igen wäßrigen Lösung eines Adduktes von 25 Mol Ethylenoxid an p-Isooctylphenol ein und verlängert die Zulaufzeit um 1 1/2 Stunden. Erhalten wird eine Dispersion B die runde Teilchen eines Durchmessers von etwa 330 nm enthält. Daraus durch Gefriertrocknung erhaltenes Copolymerisatpulver läßt sich leicht und vollständig redispergieren. Durch Redispergieren von 55 Teilen des Copolymerisatpulvers in 45 Teilen Wasser wird die 55 %-ige Vergleichsdispersion 80 erhalten.

## Dispersion C

Man arbeitet wie für Dispersion A angegeben, doch besteht Zulauf 1 aus 380 Teilen Styrol, 90 Teilen t-Butylacrylat, 15 Teilen Acrylsäure, 15 Teilen Methacrylamid, 3,75 Teilen $C_{12}$-$C_{18}$-Na-Paraffinsulfonat und 180 Teilen Wasser.

Man erhält Dispersion C eines Polymerengehalts von 33 % deren Polymerteilchen eine rauhe Oberfläche und einen Durchmesser von etwa 500 nm haben.

Nach Zugabe von Glycerin und Abdampfen von überschüssigem. Wasser erhält man daraus die Vergleichsdispersion CO.

## Dispersion D

Man arbeitet wie für Dispersion A angegeben, setzt jedoch eine Vorlage aus 500 Teilen Wasser und 0,1 Teilen des Natriumsalzes der Ethylendiamintetraessigsäure, 170 Teile Zulauf 1 und 21 Teile Zulauf 2 ein und erhitzt unter Rühren auf 85°C. Zulauf 1 ist eine Emulsion aus 500 Teilen Wasser, 960 Teilen Styrol, 144 Teilen Acrylnitril, 36 Teilen Acrylsäure, 36 Teilen Methacrylamid, 24 Teilen Maleinsäure und 5 Teilen einer 40 %-igen wäßrigen Lösung des Natriumsalzes von $C_{12}$-$C_{18}$-Paraffinsulfonat. Zulauf 2 ist eine Lösung von 8 Teilen Natriumperoxodisulfat in 200 Teilen Wasser. 30 Minuten nach Erreichen von 85°C werden innerhalb von 3 Stunden die Reste der Zuläufe 1 und 2 gleichmäßig zugegeben und dann weitere 3 Stunden bei 85°C auspolymerisieren lassen. Die erhaltene Dispersion hat einen Polymeren-Gehalt von 47,5 % und ihre Teilchen haben einen Durchmesser von etwa 750 nm und eine rauhe Oberfläche.

Nach Zusatz von Glycerin und Abdampfen von überschüssigem Wasser erhält man daraus die Vergleichsdispersion DO.

## II. Herstellung der stark dilatanten Dispersionen mit wenig temperaturabhängiger kritischer Schergeschwindigkeit

Zu den Dispersionen A, B, C und D gibt man jeweils die in der Tabelle angegebenen Zusätze an Metallverbindungen und gegebenenfalls dort angegebene zusätzliche Lösungsmittel und stellt den in der Tabelle angegebenen Feststoffgehalt durch Abdampfen von Wasser unter vermindertem Druck ein. Die erhaltenen Gemische $A_x$, $B_x$, $C_x$ und $D_x$ weisen die in der Tabelle für verschiedene Temperaturen angegebenen kritischen Schergeschwindigkeiten auf.

Die gleichen Ergebnisse werden auch erhalten, wenn bei der Herstellung der Gemische zunächst das Wasser von den Dispersionen A, B, C und D z. B. unter vermindertem Druck abgedampft, die erhaltenen pulverförmigen Rückstände in dem in der Tabelle angegebenen Lösungsmittel redispergiert und dann die Metallverbindungs-Zusätze zugegeben werden. Das Abdampfen des Wassers kann z. B. auch durch Sprüh- oder Gefriertrocknung erfolgen.

**Tabelle**

| Beispiel Nr. | Dispergiermittel | Fest-stoff-gehalt % | Zusatz | Krit.Scherge-schw.bei 20°C $\gamma_k$, 20°C[s$^{-1}$] | Faktor kritische Schergeschwindigkeit bei verschiedenen Temperaturen $F=\frac{\gamma_k(T1)}{\gamma_k(T2)}$  T1 > T2 (in °C) | | |
|---|---|---|---|---|---|---|---|
| | | | | | F | T1 | T2 |
| Vergleichs-dispersion | | | | | | | |
| A0 | Formamid/Wasser 1:1 | 55 | - | 10 | 66 | +20 | -30 |
| | | | | | 8 | +55 | +20 |
| A1 | '' | 55 | 1,5 % Ca(OH)$_2$ | 10 | 5 | +20 | -30 |
| | | | | | 0,25 | +55 | +20 |
| A2 | '' | 55 | 6,4 % Ba(OH)$_2$ · 8 H$_2$O | 15 | 5 | +20 | -30 |
| | | | | | 1,3 | +55 | +20 |
| A3 | '' | 55 | 5,4 % Sr(OH)$_2$ · 8 H$_2$O | 8,5 | 2,8 | +20 | -30 |
| | | | | | 0,3 | +55 | +20 |
| A4 | '' | 55 | 0,5 % ZnO | 4 | 2 | +20 | -30 |
| | | | | | 1,25 | +55 | +20 |
| A5 | '' | 53 | 1 % Zn-acetat | 34 | 6,8 | +20 | -30 |
| | | | | | 1,9 | +55 | +20 |
| A6 | '' | 53 | 1 % Zn-sulfat | 20 | 8 | +20 | -30 |
| | | | | | 3,4 | +55 | +20 |
| Vergleichs-dispersion | | | | | | | |
| A7 | Glycerin/Wasser 1:1 | 52 | - | 30 | 30 | +20 | -15 |
| | | | | | 17 | +60 | +20 |
| A8 | '' | 52 | 5,4 % Sr(OH)$_2$ · 8 H$_2$O | 2,5 | 17 | +20 | -15 |
| | | | | | 1,6 | +60 | +20 |
| A9 | '' | 50,5 | 8 % Ba (OH)$_2$ | 3 | 10 | +20 | -15 |
| | | | | | 2,3 | +60 | +20 |
| A10 | '' | 50,1 | 2 % Ca (OH)$_2$ | 19 | 12,7 | +20 | -15 |
| | | | | | 0,5 | +60 | +20 |
| Vergleichs-dispersion | | | | | | | |
| A11 | Wasser | 50 | - | 3950 | 20 | +60 | +20 |
| A12 | '' | 50 | 10 % LiCl | 95 | 1,1 | +60 | +20 |
| A13 | '' | 50 | 10 % NaCl | 40 | 2,5 | +60 | +20 |
| A14 | '' | 50 | 10 % KCl | 40 | 2,5 | +60 | +20 |
| A15 | '' | 50 | 10 % MgCl$_2$ | 25 | 0,5 | +60 | +20 |
| A16 | '' | 50 | 1 % Ni(OH)$_2$ | 200 | 3,0 | +60 | +20 |
| A17 | '' | 50 | 1 % SnO$_2$ | 250 | 1,8 | +60 | +20 |
| Vergleichs-dispersion | | | | | | | |
| B0 | Wasser | 55 | - | 110 | 5,2 | +20 | ± 0 |
| | | | | | 2,9 | +40 | +20 |
| B1 | Wasser | 55 | 1,5 % Ca(OH)$_2$ | 540 | 1,7 | +20 | ± 0 |
| | | | | | 1,4 | +40 | +20 |
| Vergleichs-dispersion | | | | | | | |
| C0 | Glycerin/Wasser 1:1 | 50 | - | 15 | 11 | +50 | +20 |
| C1 | '' | 50 | 1,25 Ca(OH)$_2$ | 11 | 1,0 | +50 | +20 |
| C3 | Ethylenglykol/Wasser 1:1 | 50 | 0,85 Ca (OH)$_2$ | 12 | 1,5 | +50 | +20 |
| Vergleichs-dispersion | | | | | | | |
| D0 | Glycerin/Wasser 1:1 | 48 | - | 10 | 38 | +50 | +20 |
| D1 | '' | 48 | 1,5 % Ca(OH)$_2$ | 8 | 1,4 | +50 | +20 |

**Patentansprüche**

1. Dispersionen von Copolymerisaten aus 1 bis 10 Gew.% α,β-monoolefinisch ungesättigten Mono- und/oder Dicarbonsäuren und 99 bis 90 Gew.% anderen olefinisch ungesättigten Monomeren mit stark dilatantem Fließverhalten, die durch Emulsionscopolymerisation hergestellt sind, gekennzeichnet durch einen Gehalt von 0,1 bis 30 Gew.%, bezogen auf die Copolymerisate, an Oxiden, Hydroxiden, Carbonaten und/oder wasserlöslichen Salzen 1- oder 2-wertiger Metalle.

2. Dispersionen gemäß Anspruch 1, dadurch gekennzeichnet, daß sie 0,5 bis 10 Gew.% Oxide, Hydroxide, Carbonate und/oder wasserlösliche Salze des Magnesiums, Calciums und/oder Zinks enthalten.

**Claims**

1. A dispersion, prepared by emulsion copolymerization and having highly dilatant flow, of a copolymer of from 1 to 10 % by weight of α,β-monoolefinically unsaturated monocarboxylic acids and/or dicarboxylic acids and from 99 to 90 % by weight of other olefinically unsaturated monomers, which dispersion contains from 0.1 to 30 % by weight, based on the copolymer, of oxides, hydroxides, carbonates and/or water-soluble salts of monovalent or divalent metals.

2. A dispersion as claimed in claim 1, which contains from 0.5 to 10 % by weight of oxides, hydroxides, carbonates and/or water-soluble salts of magnesium, calcium and/or zinc.

**Revendications**

1. Dispersions de capolymères constitués de 1 à 10 % en poids d'acides mono- et/ou dicarboxyliques α,β-monooléfiniquement insaturés et de 99 à 90 % en poids d'autres monomères oléfiniquement insaturés, ces dispersions présentent un écoulement avec forte dilatance et étant préparées par copolymérisation en émulsion, caractérisées par une teneur de 0,1 à 30 % en poids, par rapport aux copolymères, en oxydes, hydroxydes, carbonates et/ou sels hydrosolubles de métaux mono- ou divalents.

2. Dispersions suivant la revendication 1, caractérisées en ce qu'elles contiennent 0,5 à 10 % en poids d'oxydes, d'hydroxydes, de carbonates et/ou de sels hydrosolubles de magnésium, de calcium et/ou de zinc.